(19) Europäisches Patentamt
European Patent Office
Office européen des brevets

(11) Veröffentlichungsnummer : **0 205 888**
**B1**

(12) # EUROPÄISCHE PATENTSCHRIFT

(45) Veröffentlichungstag der Patentschrift : 23.11.89

(21) Anmeldenummer : 86106543.1

(22) Anmeldetag : 14.05.86

(51) Int. Cl.[4] : **G 02 B 1/04**, C 08 G 18/38, C 08 G 18/61, C 08 G 77/54, C 08 L 83/14

(54) **Modifizierter Siliconkautschuk und seine Verwendung als Material für eine optische Linse sowie optische Linse aus diesem Material.**

(30) Priorität : 15.05.85 DE 3517612

(43) Veröffentlichungstag der Anmeldung : 30.12.86 Patentblatt 86/52

(45) Bekanntmachung des Hinweises auf die Patenterteilung : 23.11.89 Patentblatt 89/47

(84) Benannte Vertragsstaaten : CH DE FR GB IT LI SE

(56) Entgegenhaltungen :
EP–A– 0 068 385
EP–A– 0 077 744
EP–A– 0 109 355
FR–A– 1 374 574
FR–A– 2 398 084

(73) Patentinhaber : **CIBA-GEIGY AG**
**Klybeckstrasse 141**
**CH-4002 Basel (CH)**

(72) Erfinder : **Schäfer, Horst, Dr. rer. nat.**
**Wiesenau 2**
**D-8750 Aschaffenburg-Obernau (DE)**
Erfinder : **Kossmehl, Gerhard, Prof. Dr. rer. nat.**
**Grabenstrasse 38 F**
**D-1000 Berlin 45 (DE)**
Erfinder : **Neumann, Walter, Dr. rer. nat.**
**Schlehenweg 20**
**D-7923 Königsbrunn (DE)**

**EP 0 205 888 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Polysiloxane, insbesondere Siliconkautschuk, finden auf den verschiedensten Gebieten der Technik und Medizin Verwendung. Siliconkautschuk besitzt eine hohe Sauerstoffdurchlässigkeit, weshalb sich dieses Material auch für die Herstellung von Kontaktlinsen eignen würde. Jedoch ist Siliconkautschuk ein hydrophobes Material, deswegen konnte sich dieses Material als Kontaktlinsenmaterial wegen der sich daraus ergebenden Schwierigkeiten noch nicht durchsetzen, obwohl man sich schon seit etwa 1960 bemüht, dieses Material für Kontaktlinsen geeignet zu machen. Man hat hierbei im wesentlichen zwei unterschiedliche Wege beschritten, um das Siliconkautschukmaterial benetzbar zu machen. Der eine Weg besteht darin, daß man die Siliconkautschuk-Oberfläche hydrophil gestaltet (EP 0033754, US-PS 4 143 949, französische Offenlegungsschrift 2 407 232, deutsche Auslegeschriften 23 53 495 und 21 64 805). Ein weiterer bekannter Vorschlag (US-PS 39 25 178) beruht darauf, polare Gruppen in die Ketten des Polymers einzulagern.

So werden beispielsweise in der EP-A-109 355 silikonhaltige Makromere beschrieben, die Urethan-, Thiourethan-, Harnstoff- oder Amidbrücken enthalten, ferner Reste von Di- oder Triisocyanaten. Sie enthalten zusätzlich mindestens zwei end- oder seitenständige polymerisierbare olefinische Gruppen und werden über jene olefinischen Gruppen copolymerisiert.

Auch in der FR-A-2 398 084 werden Copolymere beschrieben, deren einer Bestandteil ein di- oder triolefinisches hydrophobes Siloxanmacromer ist. Erneut erfolgt die Copolymerisierung über die olefinischen Gruppen.

Aufgabe der Erfindung ist es daher, einen modifizierten Siliconkautschuk anzugeben, der hydrophil ist, und Verfahren zu seiner Herstellung zu schaffen.

Diese Aufgabe wird erfindungsgemäß durch die im Anspruch 1 bzw. Anspruch 7 angegebenen Merkmale gelöst, wobei in den Ansprüchen 17 und 18 eine optische Linse, insbesondere Kontakt- oder Intraokularlinse aus dem angegebenen hydrophilen, modifizierten Siliconkautschuk gekennzeichnet ist.

Das durch die Erfindung geschaffene Siliconkautschukmaterial ist hydrophil und stabil gegen Hydrolyse. Das klare Material besitzt auch geringe Kontaktwinkel, so daß es eine ausreichende Benetzbarkeit aufweist.

Bei der Herstellung des angegebenen Copolymers wird ausgegangen von niedermolekularen Hydroxyalkylgruppen enthaltenden Dimethyl- Siloxanen, die mit Isocyanaten zur Reaktion gebracht werden. Das so erhaltene ölige Reaktionsprodukt wird mit Hilfe eines geeigneten Initiators, insbesondere durch Reaktion mit 1-10 Gew.-% Peroxidinitiator vernetzt.

Geeignete Hydroxyalkylgruppen enthaltende Dimethylsiloxane als Ausgangsstoffe sind z. B. folgende Verbindungen :

(1) 1,3-Bis(3-hydroxypropyl)-1,1,3,3-tetramethyldisiloxan ;
(2) 1-(3-Hydroxypropyl)-1,1,3,3-tetramethyldisiloxan ;
(3) 1,3-Bis(6,7-dihydroxy-4-oxaheptyl)-1,1,3,3-tetramethyldisiloxan ;
(4) 3,5-Bis(3-hydroxypropyl)-1,1,1,3,5,7,7,7-octamethyltetrasiloxan ;
(5) 1-(6,7-Dihydroxy-4-oxaheptyl)-1,1,3,3-tetramethyldisiloxan ;
(6) 2,4,6,8-Tetrakis(3-hydroxypropyl)-2,4,6,8-tetramethylcyclotetrasiloxan ;
(7) Methylen-bis-1,4-cyclohexylencarbamidsäure-3-[3-(3-hydroxypropyl)-1,1,3,3-tetramethyldisiloxanyl]-propylester ;
(8) Hexamethylen-1,6-biscarbamidsäure-3-[3-(3-hydroxypropyl)-1,1,3,3-tetramethyldisiloxanyl]propylester ;

Die vorstehenden Verbindungen (1), (2), (3), (4) und (5) können über die entsprechenden trimethylsilylgeschützten Verbindungen (1'), (2') und (4') bzw. über die Oxiranderivate (3') und (5') (nachstehendes Reaktionsschema), die durch Addition von Allyloxytrimethylsilan bzw. Allyl-(2,3-epoxypropyl)ether an Dihydrosiloxane gewonnen werden, synthetisiert werden, wobei die jeweilige Trimethylsilylgruppe abgespalten bzw. Oxiranringe aufgespalten werden.

Die entsprechenden Reaktionen laufen nach folgendem Schema ab :

(Siehe Schema Seite 3 f.)

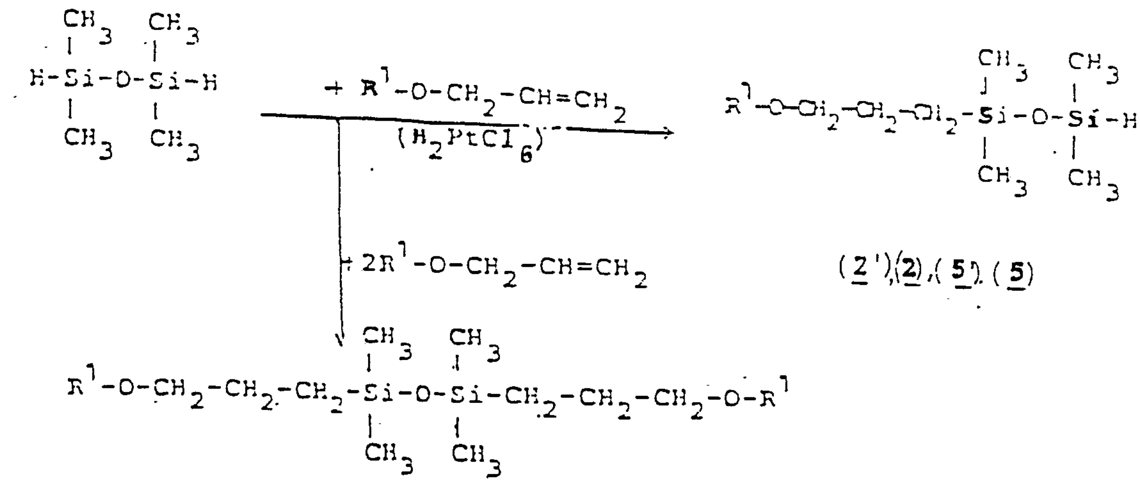


(2'),(2),(5'),(5)

(1'),(1),(3'),(3)

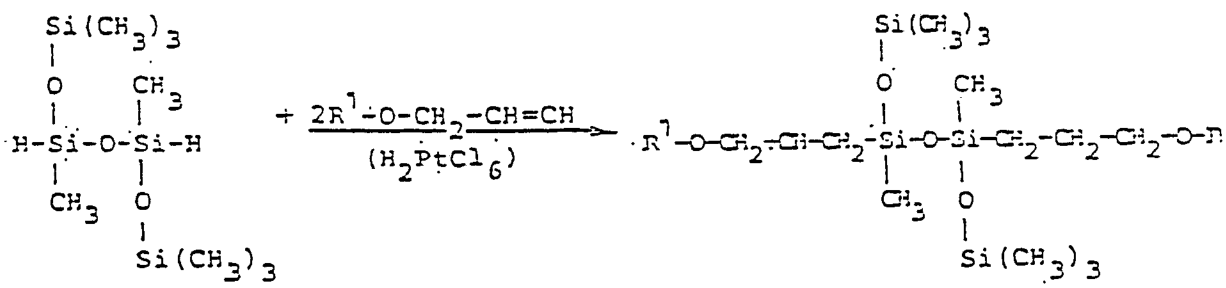


(4') (4)

| Verbindung | (1') (2') (4') | (1) (2) (4) | (3') (5') | (3) (5) |
|---|---|---|---|---|
| $-R^1$ | $-Si(CH_3)_3$ | $-H$ | 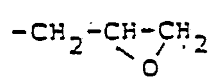 | $-CH_2-CH(OH)-CH_2OH$ |

Die vorstehend genannten Diole (1), (4), (5), (7) und (8) Diole sowie die vorstehend genannten Tetraole (3) und (6) werden mit Diisocyanaten zur Reaktion gebracht und bilden Copolymere mit Dimethylsiloxan- und Urethaneinheiten. Die erhaltenen öligen Polymerisate werden über Methylgruppen benachbarter Ketten mit Hilfe von Initiatoren, wie z. B. organischen Peroxiden, vernetzt.

Für die vorstehend genannte Verbindung (1) wird im folgenden der Reaktionsablauf formelmäßig für zwei Ausführungsbeispiele wiedergegeben, wobei als Diisocyanate

(10) Hexamethylendiisocyanat oder
(11) Methylen-bis-(1,4-cyclohexylenisocyanat)

verwendet werden.

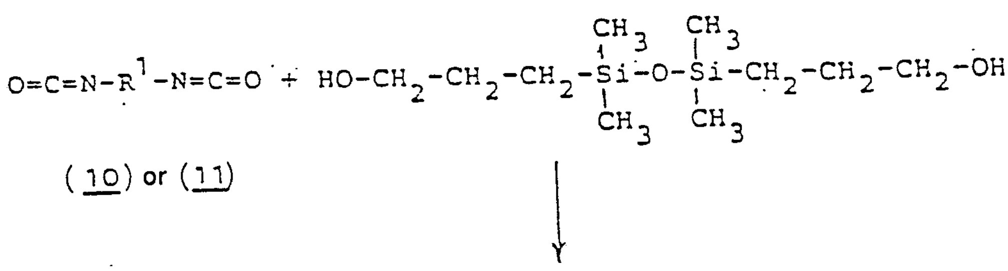

(10) or (11)

(1)

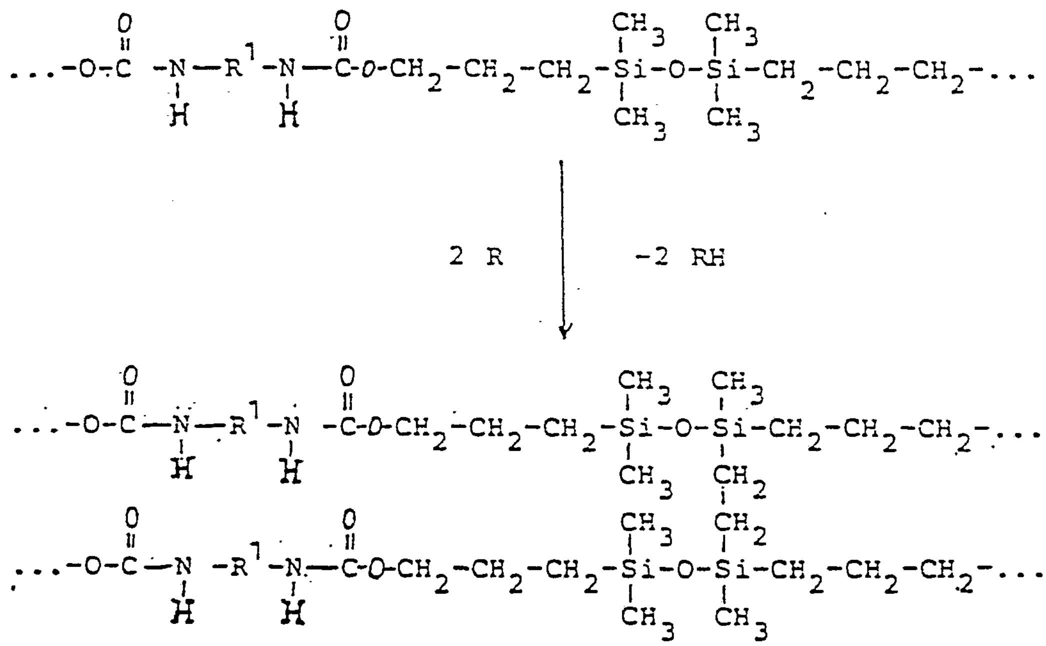


| | | |
|---|---|---|
| $R^1$: | $-(CH_2)_6-$ | 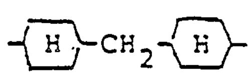 |
| | (10) | (11) |

Um die Anzahl der hydrophilen Gruppen im Polymerisat zu erhöhen, wird

(9) Pantothenol in das Polymerisat, welches Siloxan- und Urethaneinheiten in der Hauptkette aufweist, eingebaut. Hierzu wird das Pantothenol z. B. mit Hexamethylendiisocyanat (vorstehende Verbindung (10)) oder Methylen-bis-(1,4-cyclohexylenisocyanat) (vorstehende Verbindung (11)) im Molekularverhältnis von 1 : 2 zur Reaktion gebracht. Das Reaktionsprodukt kann mit dem Diol (1) oder mit dem Tetraol (3) zur Reaktion gebracht und vernetzt werden. Es bildet sich hierbei ein klarer elastischer Film. Das aus den Verbindungen (1), (9) und (10) synthetisierte Material ist stabil gegen Hydrolyse. Der Reaktionsablauf ist folgender :

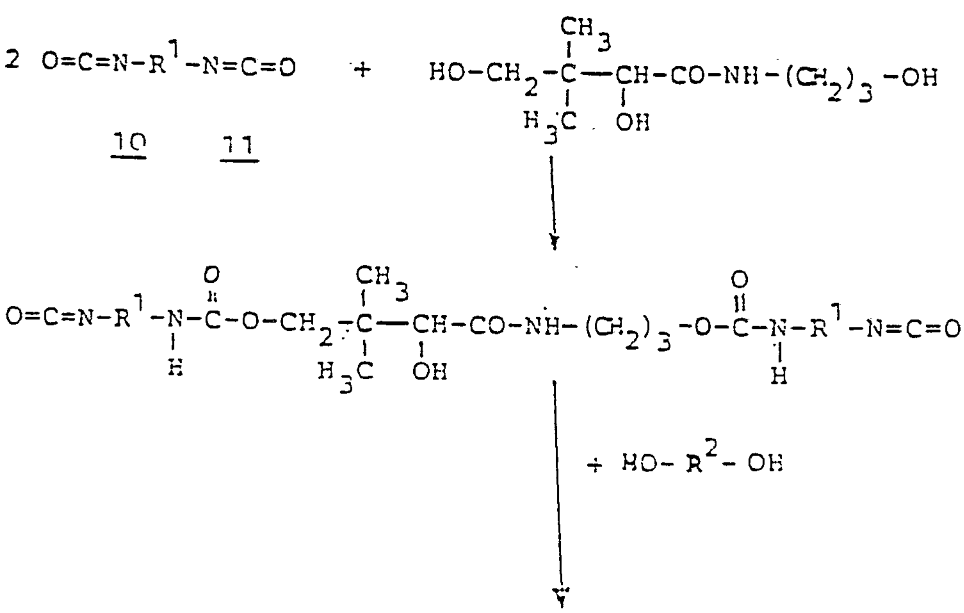


10 11 9

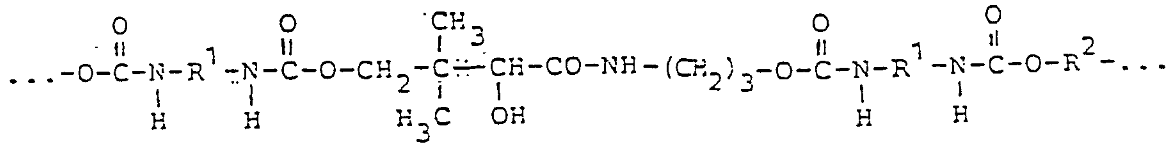

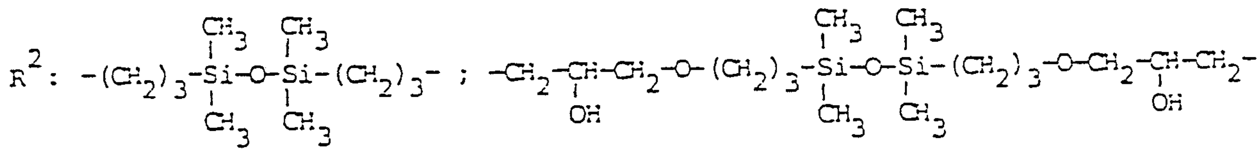

Bei der Herstellung der in der Tabelle 1 aufgelisteten Polymerisate in Form der Filme F1 bis F17 werden 10 mmol der vorstehend genannten Verbindungen (1), (3) und (6) in 100 ml absoluten Chloroform gelöst und zum Rückfluß erhitzt. 10 mmol Diisocyanat werden in 20 ml absoluten Chloroforms gelöst und unter Rühren tropfenweise zugegeben. Nach zwei Stunden wird das Volumen der Lösung auf etwa 50 ml verringert. Proben von 5 ml werden mit einem Initiator, z. B. (Di-tert-butylperoxid ; Dicumylperoxid) gemischt. Die viskosen Flüssigkeiten werden auf Glasplatten gegossen und bei erhöhter Temperatur zur Formung klarer Filme (Tabelle 1) erhitzt. In einigen Fällen wird 1,3-Divinyl-1,1,3,3-tetramethyldisiloxan (12) zugegeben.

Die vorstehend genannten Verbindungen (1) oder (3) werden mit Polymethylhydrogensiloxanöl mit OH-Endgruppen (13) oder Polymethylhydrogensiloxan (14) (erhalten aus einem Hydrolyseansatz von $Si(CH_3)Cl_2H$ mit 10 Mol-% $Si(CH_3)_3Cl$ nach dem Abdestillieren des cyclischen Tetramers) gemischt. Nach Zugabe von 2 Gew.-% Hexachlorcyclotriphosphazen, bezogen auf die Siloxanverbindungen (1) bzw. (3), wird die Mischung bei 100 °C während 20 Stunden äquilibriert. Nach Beseitigung des Katalysators und gelierter Partikel durch Absaugen werden 100 ml wasserfreies Chloroform zugegeben, und das vorstehend schon beschriebene Verfahren wird weitergeführt, wobei die in der Tabelle 2 angegebenen Polymerfilme erhalten werden.

Die folgenden Tabellen 1 und 2 geben für die Herstellung der Polymerfilme F1 bis F17 die Siloxanverbindungen, die Temperaturen, die Herstellungszeiten und die Initiatoren an.

(Siehe Tabelle 1 Seite 6 f.)

Tabelle 1

| Herstellung von Poly merfilmen aus den Hydroxyalkylgruppen enthaltenden Siloxanen (1) (3) und (6) und Diisocyanaten | | | | | | | |
|---|---|---|---|---|---|---|---|
| Film | Siloxan | Zugabe von (12) Gew.-% | Diisocyanat | Initiator Di-t-BP in Gew.-% | $T/{}^oC$ | $t/_{min}$ | Bemerkungen |
| F 1 | (3) | 0 | (10) | 2 | 100 | 70 | elastischer Film |
| F 2 | — | 0 | (11) | 5 | 120 | 240 | gelber, spröder Film |
| F 4 | — | 10 | — | 2 | 120 | 135 | hochelastischer Film |
| F 5 | — | 20 | — | 2 | 120 | 120 | — |
| F 6 | — | 30 | — | 2 | 120 | 160 | — |
| F 7 | (1) | 0 | (10) | 2 | 120 | 120 | sprödes Produkt |
| F 15 | (6) | 0 | (11) | 5 | 110 | 240 | spröder Film |
| F 16 | — | 5 | — | 2 | 120 | 240 | gelber, spröder Film |
| F 17 | — | 10 | — | 2 | 120 | 240 | — |

Di-t-BP = Di-tert-butylperoxid.

Tabelle 2

Herstellung von Poly merfilmen aus Äquilibrierungsprodukten der Siloxane (1) oder (3) mit den Verbindungen (13) oder (14) und Diisocyanaten

| Film | Siloxan | Äquilibrierungsprodukt aus | Menge in Gew.-% | Diiso-cyanat | Initiator | Gew.-% | T/°C | $t/_{min}$ | Bemerkungen |
|---|---|---|---|---|---|---|---|---|---|
| F 3 | (3) | (13) | 100 | (10) | Di-t-BP | 5 | 120 | 180 | klebriger Film |
| F 8 | (1) | (14) | 100 | — | Di-CP | 1 | 120 | 90 | harter spröder Film |
| F 9 | — | — | 100 | (11) | — | 1 | 120 | 90 | harter Film |
| F 10 | — | — | 100 | — | — | 1 | 120 | 180 | gelber spröder Film |
| F 11 | — | — | 300 | — | Di-t-BP | 1 | 120 | 180 | spröder Film |
| F 12 | — | — | 300 | — | Di-CP | 1 | 120 | 150 | gelber spröder Film |
| F 13 | — | — | 300 | — | Di-t-BP | 10 | 120 | 120 | harter Film |
| F 14 | — | — | 300 | — | Di-CP | 10 | 120 | 120 | — |

Di-t-BP = Di-tert-butylperoxid.
Di-CP = Dicumylperoxid.

In der folgenden Tabelle 3 sind die Polymerfilme F18 bis F21 aufgelistet, welche Pantothenol enthalten. Diese Polymerfilme werden wie folgt erhalten :

16,8 g (100 mmol) Hexamethylendiisocyanat (vorstehende Verbindung (10)) werden in 100 ml wasserfreiem Dioxan gelöst und auf 80 °C erwärmt. 10,3 g (50 mmol) Pantothenol (vorstehende Verbindung (9)) werden in 100 ml wasserfreiem Dioxan gelöst und tropfenweise unter Rühren dazugegeben. Die Mischung wird während einer Stunde bei 80 °C gerührt und abgekühlt. Es werden dann 12,5 g (50 mmol) der Verbindung (1), welche in 200 ml wasserfreiem Dioxan gelöst und auf 60 °C erwärmt ist, rasch dazugegeben. Nach Rühren bei 60 °C während 18 Stunden wird das gebildete feste Material abfiltriert. Das trübe Filtrat wird auf ein Volumen von etwa 80 ml reduziert. Der Rückstand wird bei 100 °C während einer Stunde zu dem klaren Film F18 vernetzt.

Bei der Reaktion mit 10,3 g (50 mmol) der Verbindung (9), 16,8 g (100 mmol) der Verbindung (10) und 20,0 g (50 mmol) der Verbindung (3) werden zwei getrennte Phasen (perforierter Film und cremiges Produkt) gebildet.

Das Reaktionsprodukt aus 26,0 g (100 mmol) der Verbindung (11) und 10,3 g (50 mmol) der Verbindung (9) ergibt mit der äquivalenten Menge von 12,5 g (50 mmol) der Verbindung (1) bzw. 20,0 g (50 mmol) der Verbindung (3) die klaren Filme F20 bzw. F21 von klebriger bzw. spröder Konsistenz.

Tabelle 3

Herstellung von Polymerfilmen aus den Siloxanen (1) bzw. (3) unter Verwendung von Pantothenol als Ausgangsstoffe

| Film | Siloxan | Diisocyanat | T/°C | $t/_{min}$ | Bemerkungen |
|---|---|---|---|---|---|
| F 18 | (1) | (10) | 100 | 60 | elastischer Film |
| F 19 | (3) | — | 100 | 60 | inhomogener Film |
| F 20 | (1) | (11) | 100 | 90 | klebriges Produkt |
| F 21 | (3) | — | 100 | 90 | trüber spröder Film |

## IR- und FMIR-IR-Spektren der Polymerisate

Die aus der Reaktion der Verbindungen (10) bzw. (11) mit den Hydroxyalkylsiloxanen (1), (3) bzw. (6) erhaltenen Verbindungen zeigen nach dem Abziehen des Lösungsmittels in ihren IR-Spektren, die an Filmen gewonnen wurden, die Amidschwingung I und II bei 1 700 $cm^{-1}$ und 1 520 $cm^{-1}$. Die NH-Valenzbande wurde bei 3 350 $cm^{-1}$ gefunden. Charakteristische Schwingungen für Siloxaneinheiten (M. Sakiyama, Bull. Chem. Soc. Japan 31, 67 (1958) mit hohen Intensitäten sind bei 1 250 $cm^{-1}$, ($Si—CH_3$ zusammen mit Amid III) ; und bei 1 000-1 100 $cm^{-1}$ (Si—O—Si) ; und bei 800 $cm^{-1}$ ($Si(CH_3)_2$) vorhanden (N. Wright, M. J. Hunter, J. Am. Chem. Soc., 69, 803 (1947)).

Nach der Vernetzungsreaktion über Siloxaneinheiten verschiedener Polymerketten entstehen klare elastische Filme (F1 bis F17). Die Filme lassen sich durch ihre FMIR-IR-Spektren (N. J. Harrick, J. physik. Chem. 64, 1110 (1960) und J. Fahrenfort, Spectrochim. Acta 17, 698 (1961) charakterisieren. Diese Filme zeigen näherungsweise die gleichen Banden wie die vorstehenden viskosen Polymerisate. Die Intensitäten der Amidschwingungen I und II und die NH-Valenzschwingung bei 3 350 $cm^{-1}$ sind von geringerer Intensität als für die vorstehend beschriebenen Polymerisate. Die Spektren der Filme, welche durch Zugabe der Verbindungen (13) bzw. (14) (Tabelle 2) hergestellt wurden, zeigen erwartungsgemäß zusätzliche Si—H-Absorptionen bei 2 160 $cm^{-1}$. Die Spektren der Filme F6 und F9 zeigen Isocyanatabsorptionen mittlerer Intensität bei 2 270 $cm^{-1}$. Alle anderen Filme (F1-F5, F8 und F10-F17 besitzen diese charakteristischen Bande der Isocyanatendgruppen nicht.

## Die Sauerstoffpermeabilität der Filme

Die Sauerstoffpermeabilität wurde mit einem Sauerstofffluß- Meßgerät nach Schema Versate gemessen. Die Filme F1-F18 besitzen Sauerstoffdurchlässigkeiten P mit Werten zwischen 1,0 × $10^{-11}$ und 52,0 × $10^{-11}$ ml $O_2$ × $cm^2$/ml × mm Hg × s (sh. nachfolgende Tabelle 4). Die Sauerstoffpermeabilität des Materials hängt ab von der Dicke und erreicht eine obere Grenze (F. J. Haberich, Referatesammlung der 12. Aschaffenburger Kontaktlinsentagung vom 22. bis 24. März 1979, S. 16). Die Transmissibilität berücksichtigt die Dicke des Materials und liegt bei Werten zwischen 0,6 × $10^{-9}$ und 8,4 × $10^{-9}$ ml $O_2/cm^2$ × mm Hg × s. Der Sauerstofffluß J besitzt für die Filme Werte zwischen 0,3 und 4,7 $\mu l/cm^2$ × h.

## Der Kontaktwinkel der Filme

Der Kontaktwinkel ist ein Maß für die Benetzbarkeit der Oberflächen und wird mit Hilfe der Blasenmethode (H. Brevit, W. Müller-Lierheim, Referatesammlung der 12. Aschaffenburger Kontaktlinsentagung vom 22. bis 24. März 1979, S. 52) bestimmt. Die Kontaktwinkel der synthetisierten Filme F1-F18

besitzen Werte zwischen 30° und 77° (siehe nachfolgende Tabelle 4). Hydrophile Materialien sind charakterisiert durch Kontaktwinkel bis zu maximal 66° (Ch. F. Kreiner, « Kontaktlinsenchemie », Median-Verlag, Heidelberg, 1980, S. 84).

Der Wassergehalt der Filme

Der Wassergehalt der Filme (G. Koßmehl, N. Klaus, H. Schäfer, Angew. Makromol. Chem. 132/124, 241 (1984)) ist definiert als

$$H\,\% = \frac{\text{Gewicht (naß)} - \text{Gewicht (trocken)}}{\text{Gewicht (naß)}} \cdot 100$$

Der Wassergehalt der Filme F1-F6 ist niedrig (siehe nachfolgende Tabelle 4. Die Materialien der Filme F8-F17 besitzen einen vernachlässigbaren Wassergehalt. Der Film F18 besitzt einen Wassergehalt von 4,6 Gew.-% bei einer linearen Quellung (G. Koßmehl, N. Klaus, H. Schäfer, Angew. Makromol. Chem. 132/124, 241 (1984)) von 1,1 %.

Tabelle 4

Sauerstoffdurchlässigkeit, Kontaktwinkel und Wassergehalt der Filme F1-F18

| Film | Filmdicke in mm | Sauerstoffdurchlässigkeit $P\cdot10^{11\,a)}$ | $T\cdot10^{9\,b)}$ | $J^{c)}$ | Kontaktwinkel in grd | Wassergehalt in Gew.-% |
|---|---|---|---|---|---|---|
| F 1 | 0,17 | 3,4 | 2,0 | 1,1 | 32 | 3,7 |
| F 3 | 0,17 | 8;5 | 5,0 | 2,8 | 30 | 1,7 |
| F 4 | 0,17 | 1,0 | 0,6 | 0,3 | 43 | 2,0 |
| F 5 | 0,34 | 3,4 | 1,0 | 0,6 | 33 | 1,5 |
| F 6 | 0,23 | 1,4 | 0,6 | 0,3 | 45 | 3,3 |
| F 8 | 0,40 | 25,2 | 6,3 | 3,5 | 77 | — |
| F 9 | 0,46 | 17,9 | 3,9 | 2,2 | 46 | — |
| F 10 | 0,39 | 12,9 | 3,3 | 1,8 | 69 | — |
| F 11 | 0,23 | 15,0 | 6,5 | 3,6 | 60 | — |
| F 12 | 0,62 | 52,0 | 8,4 | 4,7 | 47 | — |
| F 13 | 0,25 | 19,8 | 7,9 | 4,4 | 39 | — |
| F 14 | 0,26 | 19,5 | 7,5 | 4,2 | 71 | — |
| F 18 | 0,35 | 29,2 | 8,3 | 4,6 | 59 | 4,6 |

(a) P in ml $O_2\cdot cm^2/ml\cdot mmHg\cdot s$.
(b) T in ml $O_2/cm^2\cdot mmHg\cdot s$.
(c) J in $\mu l/cm^2\cdot h$.
Die Filme F2, F7 und F15-F17 waren für die Messung nicht stabil genug.

Eignung der beschriebenen Materialien für Kontaktlinsen

Unter Berücksichtigung der Werte für die Sauerstoffdurchlässigkeit, den Kontaktwinkel und den Wassergehalt der hergestellten Filme ergibt sich, daß die Filme F3, F9, F11, F12, F13 und F18 die Anforderungen erfüllen, welche von Kontaktlinsenmaterialen gefordert werden (Ch. F. Kreiner, « Kontaktlinsenchemie », Median-Verlag, Heidelberg, 1980, S. 84). Diese Filme enthalten keine wasserlöslichen Fraktionen und sind dann toxikologisch unbedenklich. Der Film F18, der aus den vorstehenden Verbindungen (1), (9) und (10) hergestellt wurde, besitzt eine äußerst hohe mechanische Stabilität und gute Sauerstoffdurchlässigkeit.

Die Filme F8, F10 und F14 sind für Kontaktlinsenmaterialien nach zusätzlicher Oberflächenhydrophilierung geeignet.

Im folgenden werden weitere Materialien beschrieben, die durch Additionsreaktionen von Mono- bzw. Diisocyanaten mit den vorstehenden Hydroxyalkylverbindungen (1), (2), (3), (4) und (5) gewonnen werden.

So werden beispielsweise bei der Reaktion des Diols (1) mit Isocyanaten bzw. Diisocyanaten (W. Siefken, Justus Liebigs Ann. Chem. 592, 75 (1948) die Siloxane mit Urethaneinheiten (15) bis (17) und die linearen Copolymere (18) und (19), die Siloxan- und Urethaneinheiten enthalten, gebildet.

(Siehe Schema Seite 10 f.)

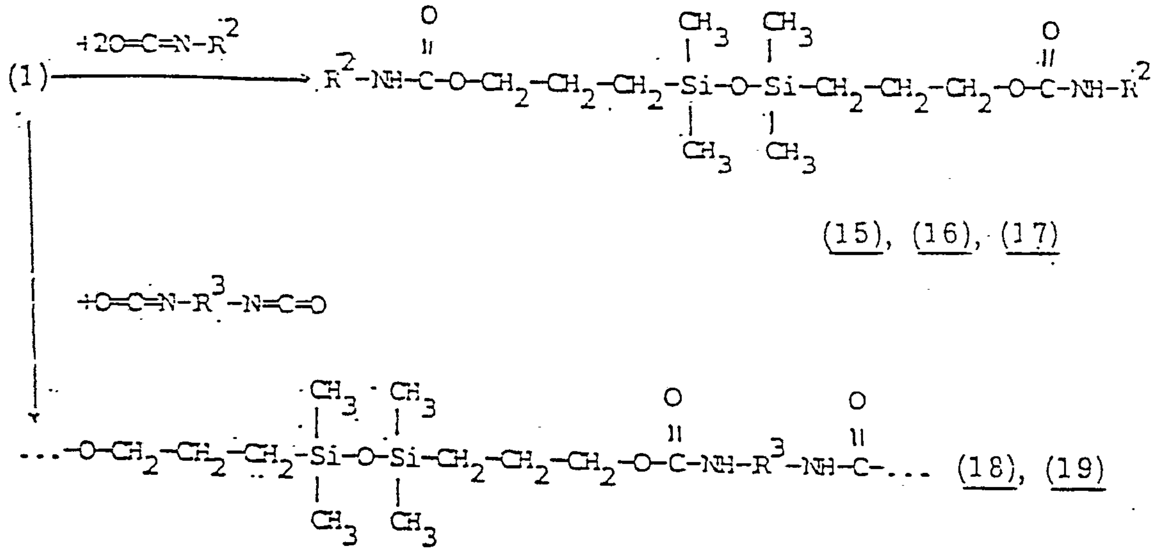


(15), (16), (17)

(18), (19)

| | (15) | (16) | (17) |
|---|---|---|---|
| $-R^2$ | $-C_2H_5$ | $-C_4H_9$ | $-C_6H_{13}$ |

| | (18) | (19) |
|---|---|---|
| $-R^3-$ | $-C_4H_8-$ | $-C_6H_{12}-$ |

Die erhaltenen Verbindungen (15) bis (17) und Polymerisate (18) und (19) sind flüssige bzw. hochviskose Produkte.

Ausgehend von dem Diol (4) werdenfolgende : Reaktionen durchgeführt.

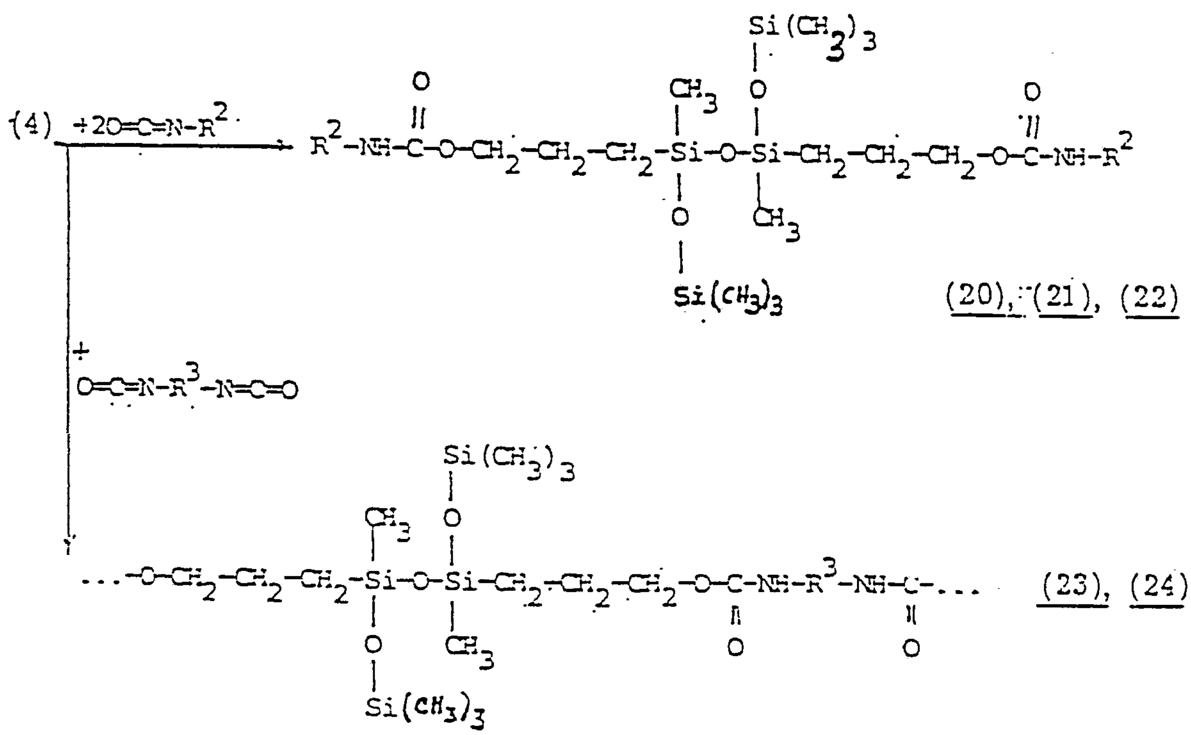


(20), (21), (22)

(23), (24)

| | (20) | (21) | (22) |
|---|---|---|---|
| $-R^2$ | $-C_2H_5$ | $-C_4H_9$ | $-C_6H_{13}$ |

| | (23) | (24) |
|---|---|---|
| $-R^3-$ | $-C_4H_8-$ | $-C_6H_{12}-$ |

Die Modellverbindungen (20) bis (22) sind flüssig, und die Polymerisate (23) und (24) sind fest.

Die synthetisierten, vorstehend angegebenen Verbindungen (15) bis (17) sowie (20) bis (22) und die vorstehenden Polymerisate (18), (19), (23) und (24) werden durch spektroskopische Verfahren charakterisiert. Die Kombination der IR-Spektren (L. J. Bellamy, « The Infra-red Spectra of Complex Molecules », Halsted Press, Third Edition, New York (1975), S. 374) $^1$H-NMR- und MS-Spektren geben klare Aussagen über die Struktur der synthetisierten Verbindungen und Polymere. Die IR-Spektren der Verbindungen und Polymerisate werden an KBr-Tabletten bzw. an Filmen aufgenommen. Alle Modellverbindungen (15) bis (17) sowie (20) bis (22) und Polymerisate (18), (19), (23) und (24) enthalten Banden bei 2 960 und 2 880 $cm^{-1}$ ($CH_2$) und 1 410 $cm^1$ (Si—$CH_2$—). Die Siloxaneinheiten in den Verbindungen und Polymerisaten zeigen IR-Absorption unter 1 400 $cm^{-1}$. Bei 800 $cm^{-1}$ und 840 $cm^{-1}$ sind die symmetrischen und asymmetrischen Valenzschwingungsbanden für Si—$CH_3$ vorhanden. Im Bereich von 1 030-1 080 $cm^{-1}$ zeigen alle Verbindungen und Polymerisate starke Si—O—Si-Absorption. Bei 1 250 $cm^{-1}$ ist die charakteristische Absorptionsbande der Si—$CH_3$ Schwingung (M. Sakiyama, Bull. Chem. Soc. Japan 31, 67 (1958) sichtbar. Die Verbindungen enthalten Urethaneinheiten, die im Bereich 1 500-1 720 $cm^{-1}$ die Diamidbande I und II zeigen. Die Valenzschwingung der Urethaneinheiten ist bei 3 340 $cm^{-1}$. Ausgewählte IR-Absorptionsbanden der Modellverbindungen (15) bis (17) und (20) bis (22) sind in der folgenden Tabelle 5 angegeben. Außerdem sind in dieser Tabelle 5 die charakteristischen IF-Frequenzen der Polymerisate (18), (19), (23) und (24) aufgelistet.

(Siehe Tabelle 5 Seite 11 f.)

Tabelle 5

IR-absorptionsbanden (Wellenzahlen in cm[1]) der Modellverbindungen und Polymerisate

| Substanz | $\nu$ (N – H) | $\nu$ (>C=O) Amidbande I | $\nu$ (C – N) + $\delta$ (C – N – H) Amidbande II | $\delta$ (Si – $CH_3$) | $\nu$ (Si – O – Si) | $\nu$ (Si – $CH_3$) |
|---|---|---|---|---|---|---|
| (15) | 3 340 (m) | 1 700 (s) | 1 530 (m) | 1 255 (s) | 1 155 (s) | 800 (m) |
| (16) | 3 345 (m) | 1 715 (s) | 1 525 (m) | 1 250 (s) | 1 060 (s) | 795 (m) |
| (17) | 3 340 (m) | 1 715 (s) | 1 535 (m) | 1 255 (s) | 1 050 (s) | 795 (m) |
| (18) | 3 340 (m) | 1 700 (s) | 1 525 (m) | 1 250 (s) | 1 040-1 080 (s) | 800 (m) |
| (19) | 3 360 (m) | 1 700 (s) | 1 540 (m) | 1 260 (s) | 1 050-1 070 (s) | 795 (m) |
| (20) | 3 340 (m) | 1 700 (s) | 1 535 (m) | 1 255 (s) | 1 040-1 080 (s) | 795 (m) |
| (21) | 3 335 (m) | 1 700 (s) | 1 535 (m) | 1 260 (s) | 1 040-1 070 (s) | 795 (m) |
| (22) | 3 335 (m) | 1 700 (s) | 1 535 (m) | 1 260 (s) | 1 040-1 070 (s) | 795 (m) |
| (23) | 3 360 (m) | 1 695 (s) | 1 530 (m) | 1 250 (s) | 1 040-1 070 (s) | 795 (m) |
| (24) | 3 410 (m) | 1 695 (s) | 1 535 (m) | 1 260 (s) | 1 040-1 070 (s) | 795 (m) |

(m : mittel ; s : stark)

In den $^1$H-NMR-Spektren der niedermolekularen Verbindungen werden die Methylenprotone, welche den C=O-Gruppen benachbart sind, um etwa 1 ppm verschoben. Bei einem niedrigeren Feld liegen die Methylprotonen in der α-Position in Nachbarschaft der NH-Gruppe. Die Methylgruppen, welche an Si-Atome gebunden sind, zeigen Resonanzsignale zwischen 0,0 und 0,1 ppm.

Die $^1$H-NMR-Spektren der löslichen Polymerisate (18) und (19) sind ähnlich den Spektren der entsprechenden Modellverbindungen (16) und (17). Die Massenspektren zeigen Fragmente, die Moleküleinheiten der synthetisierten Modellverbindungen analog sind.

Die Molekülmassen der Polymerisate (18) und (19) wurden durch Dampfdruckosmometrie erhalten und liegen bei 6000 für die Verbindung (18) und bei 8000 für die Verbindung (19). Das entspricht einem Durchschnittskondensationsgrad von 15 bzw. 20. Aufgrund ihrer Unlöslichkeit war es nicht möglich, die Molekülmassen der Polymerisate (23) und (24) zu bestimmen.

Die niedermolekularen Verbindungen (1), (3), (4) und (5) sind geeignet zur Synthese von entsprechenden Verbindungen mit längerer Siloxankette durch Äquilibrierung mit cyclischen linearen Dimethylsiloxanen. Die Dimethylsiloxane (1) und (3) mit hydrophilen Hydroxyalkylgruppen können verwendet werden für die Äquilibrierung von Siliconkautschukfilmen zur Erzeugung hydrophiler Oberflächen auf hydrophoben Silikonkautschukmaterialien.

Die Copolymere (18), (19), (23) und (24) mit den Siloxan- und Urethaneinheiten können als reine Substanzen oder in Mischung mit Polydimethylsiloxanen als Ausgangsstoffe dienen für eine radikalische Vernetzungsreaktion bei Temperaturen von 100-160 °C (Hochtemperaturvulkanisation) zur Bildung klarer und farbloser Silikonkautschukfilme, wie es im vorstehenden in den Beispielen erläutert wurde.

## Beispiele 1 und 2

Die beiden vorstehend genannten Verbindungen (1) und (2) werden durch Addition von Allyloxytrimethylsilan an 1,1,3,3-tetramethyldisiloxan in Anwesenheit von $H_2PtCl_6$ als Katalysator gebildet. (S. Kohama und S. Fukukawa, Nippon Kagaku Zasshi 81, 170 (1960) ; Chem. Abstr. 56, 496e, f (1962) ; G. Greber und S. Jäger, Makromol. Chem. 57, 150 (1962)). Die anschließende Hydrolyse der beiden Reaktionsprodukte führt zu den vorstehend genannten Verbindungen (1) und (2).

## Beispiel 3

Die vorstehend genannte Verbindung (3) wird wie folgt hergestellt.

114,0 g (1 mol) Allylglycidylether werden auf 100 °C erhitzt, und es werden 2 ml einer 1 Gew.-% Hexachloroplatinsäurelösung in Ethylenglykoldiethylether zugegeben. 67,0 g (0,5 mol) 1,1,3,3-Tetramethyldisiloxan werden langsam tropfenweise zugegeben, wobei verhindert wird, daß die Temperatur 135 °C übersteigt. Nach Zugabe von 1,1,3,3-Tetramethyldisiloxan wird die Mischung bei 120 °C so lange gerührt, bis kein Rücklauf mehr auftritt. Das Reaktionsgemisch wird mit Hilfe einer Füllkörperkolonne fraktioniert. Das gebildete 1,3-Bis(6,7-epoxy-4-oxaheptyl)-1,1,3,3-tetramethyldisiloxan siedet als klare Flüssigkeit bei 174 °C und 1,4 hPa.

Ausbeute : 104,3 g (57,6 %), $n_D^{20}$ : 1,4511

$^1$H-NMR ($CDCl_3$, 270 MHz) : δ = 0,02 (s ; Si—$CH_3$, 12H), 0,46 (m ; Si—$CH_2$—, 4H), 1,54 (m ; —$CH_2$—$CH_2$—$CH_2$—, 4H), 2,55 (q ; —CH—$CH_2$—O—, 2H), 2,73 (t ; —CH—$CH_2$—O—, 2H), 3,09 (m ; —$CH_2$—CH—, 2H), 3,33 (m ; —$CH_2$—O—$CH_2$—CH—, 2H), 3,40 (m ; —$CH_2$—$CH_2$—O—, 4H), 3,65 (q ; —$CH_2$—O—$CH_2$—CH—, 2H).

$C_{16}H_{34}O_5Si_2$ (362,6)

Berechnet : C 53,00 H 9,45

Gefunden : C 53,27 H 9,48

36,3 g (0,1 mol) der vorstehend genannten Epoxyverbindung werden in 100 ml Chloroform gelöst. 50 ml einer 5 Gew.-% $H_2SO_4$ werden zugegeben. Nach einstündigem Rühren unter Rückfluß wird die organische Phase abgetrennt. Die wäßrige Phase wird mit 50 ml Chloroform extrahiert. Die vereinigten organischen Phasen werden mit Wasser gewaschen und mit $Na_2SO_4$ getrocknet. Das Chloroform wird abgezogen und der Rückstand & Stunden bei 40 °C und 0,3 hPa gerührt. Hierbei wird die Verbindung (3) als klare viskose Flüssigkeit erhalten.

Ausbeute : 33,6 g (84,3 %), $n_D^{20}$ : 1,4662

$^1$H-NMR ($CDCl_3$, 270 MHz) : δ = 0,02 (s ; Si—$CH_3$, 12H), 0,45 (m ; Si—$CH_2$—, 4H), 1,55 (m ; —$CH_2$—$CH_2$—$CH_2$—, 4H), 3,38 (m ; —$CH_2$—$CH_2$—O—, 4H), 3,41 (m ; —O—$CH_2$—CH—, 4H), 3,57 (m ; —$CH_2$—OH, 4H), 3,83 (m ; —CH—OH, 2H), 4,69 (m(b) ; —CH—OH, —$CH_2$—OH, 4H).

$C_{16}H_{38}O_7Si_2$ (398,7)

Berechnet : C 48,21 H 9,61

Gefunden : C 47,57 H 9,37

Beispiel 4

Im folgenden wird ein Ausführungsbeispiel zur Gewinnung der Verbindung (4) beschrieben. beschrieben.

13,0 g (100 mmol) Allyloxytrimethylsilan werden in einen Rundkolben gebracht und bis zum Rückfluß erhitzt. Nach Zugabe von 1 ml einer 1 Gew.-% $H_2PtCl_6$-Lösung in Diethylenglykolether werden 14,1 g (50 mmol) 1,1,1,3,5,7,7,7-Octamethyltetrasiloxan unter starkem Rühren tropfenweise zugegeben. Die Lösung wird danach 24 Stunden bei 100 °C gerührt und dann fraktioniert. Das Reaktionsprodukt wird durch eine Füllkörperkolonne destilliert. Man erhält 3,5-Bis(3-trimethylsilyloxypropyl)-1,1,1,3,5,7,7,7-octamethyltetrasiloxan. Diese Verbindung besitzt einen Siedepunkt von 141 bis 143 °C bei 0,5 hPa.

Nach Zugabe von 30 ml Ether werden 7,0 g (13 mmol) dieses Alkylpolysiloxans 12 Stunden mit 5 ml einer 5 Gew.-% HCl bei Raumtemperatur hydrolysiert. Die organische Phase wird abgetrennt und mit einer $NaHCO_3$-Lösung und danach mit Wasser neutral gewaschen. Nach Trocknung mit $Na_2SO_4$ wird der Ether verdampft, und der Rückstand wird 10 Stunden bei 30 bis 40 °C und einem Druck von 0,15 hPa gerührt. Hierbei wird die Verbindung (4) als klare viskose Flüssigkeit erhalten.

Ausbeute : 5,53 g (13,9 %), $n_D^{20}$ : 1,4347

$^1$H-NMR ($CCl_4$, 100 Hz) : δ = 0,13 (s ; Si—$CH_3$, 24H), 0,55 (m ; Si—$CH_2$—, 4H), 1,56 (m ; —$CH_2$—$CH_2$—$CH_2$—, 4H), 3,50 (t ; —$CH_2$—O—, 4H), 4,14 (s ; —OH, 2H).

$C_{14}H_{38}O_5Si_4$ (398,8)

Berechnet : C 42,16 H 9,60

Gefunden : C 41,12 H 9,80

Beispiel 5

Im folgenden wird ein Ausführungsbeispiel für die Synthese der Verbindung (5) beschrieben.

17,5 g (130 mmol) 1,1,3,3-Tetramethyldisiloxan werden auf Rückflußtemperatur gebracht, und es wird 1 ml einer 1 Gew.-% $H_2PtCl_6$-Lösung in Diethylenglykoldiethylether zugegeben. 11,4 g (100 mmol) Allylglycidylether werden tropfenweise zugegeben. Dabei erhöht sich die Temperatur auf 95 °C. Das Reaktionsgemisch wird 2 Stunden bei 120 °C gerührt und dann mit Hilfe einer Füllkörperkolonne fraktioniert. Bei 73 °C und 0,65 hPa wird 1-(6,7-Epoxy-4-oxaheptyl)-1,1,3,3-tetramethyldisiloxan (Monoadditionsverbindung) als klare Flüssigkeit erhalten.

Ausbeute : 13,0 g (52,3 %), $n_D^{20}$ : 1,4293

$^1$H-NMR ($CDCl_3$, 270 MHz) : δ = 0,02 (s ; Si—$CH_3$, 6H), 0,11 (s ; SiH—$CH_3$, 6H), 0,47 (m ; Si—$CH_2$—, 2H), 1,57 (m ; —$CH_2$—$CH_2$—$CH_2$—, 2H), 2,55 (q ; —CH—$CH_2$—O, 1H), 2,73 (t ; —CH—$CH_2$—O, 1H), 3,09 (m ; —$CH_2$—CH—, 1H), 3,33 (m ; —$CH_2$—O—$CH_2$—CH—, 1H), 3,41 (m ; —$CH_2$—$CH_2$—O—, 2H), 3,65 (q ; —$CH_2$—O—$CH_2$—CH—, 1H).

$C_{10}H_{24}O_3Si_2$ (248,5)

Berechnet : C 48,33 H 9,74

Gefunden : C 48,00 H 9,52

10 g (40 mmol) der vorstehend erhaltenen Verbindung werden in 100 ml Ether gelöst und mit 50 ml einer 5 Gew.-% HCl versetzt. Nach kräftigem Rühren während vier Stunden wird die organische Phase abgetrennt. Die wäßrige Phase wird mit 50 ml Ether extrahiert. Die vereinigten organischen Phasen werden mit Wasser gewaschen und mit $Na_2SO_4$ getrocknet. Der Ether wird verdampft, und der Rückstand wird in einer Kugel-Rohrdestille destilliert. Die Verbindung (5) besitzt einen Siedepunkt von 140 °C bei 0,35 hPa und ist eine klare Flüssigkeit.

Ausbeute : 7,1 g (66,6 %), $n_D^{20}$ : 1,4425.

$^1$H-NMR ($CDCl_3$, 270 MHz) : δ = 0,02 (s ; Si—$CH_3$, 6H), 0,10 (d ; SiH—$CH_3$), 6H), 0,47 (m ; Si—$CH_2$—, 2H), 1,57 (m ; —$CH_2$—$CH_2$—$CH_2$—, 2H), 2,95 (d ; —CH—OH, 1H), 3,44 (t ; —$CH_2$—$CH_2$—O—, 2H), 3,48 (d ; —O—$CH_2$—CH—, 2H), 3,55 (m ; —$CH_2$—OH, 2H), 3,55 (b ; —$CH_2$—OH, 1H), 3,93 (m ; —CH—OH, 1H), 4,63 (m ; Si—H, 1H).

$C_{10}H_{26}O_4Si_2$ (266,5)

Berechnet : C 45,07 H 9,83

Gefunden : C 44,18 H 9,81

Beispiel 6

Die Verbindung (6) kann wie folgt hergestellt werden :

24,0 g (100 mmol), 2,4,6,8-Tetramethylcyclotetrasiloxan (R. O. Sauer, W. J. Schreiber, S. D. Brewer, J. Am. Chem. Soc. 68, 962, 1946)) werden in einen Rundkolben gebracht, 2 ml einer 1 Gew.-% $H_2PtCl_6$-Lösung in Ethylenglykoldiethylether werden zugegeben und es wird auf 95 °C erhitzt. 52,1 g (400 mmol)

Allyloxytrimethylsilan (S. Kohama, S. Fukukawa, Nippon Kagaku Zasshi, 81, 170, 1960)) werden tropfenweise unter Rühren zugegeben, wobei sich die Temperatur auf 106 °C erhöht. Die Mischung wird auf 110 °C erhitzt und gerührt, bis kein Rückfluß mehr erkennbar ist. Nach Abkühlen auf Raumtemperatur werden 200 ml Ether und 100 ml 0,2 NHCl dazugegeben und es wird 12 Stunden hydrolysiert. Die organische Phase wird abgetrennt und dreimal mit je 150 ml destillierten Wassers gewaschen und dann über $Na_2SO_4$ getrocknet. Das Lösungsmittel wird verdampft und der Rückstand langsam bei 40 °C und 0,3 hPa 24 Stunden gerührt. In der letzten Stunde wird die Temperatur des Rückstandes auf 80 bis 90 °C erhöht. Nach Absaugen durch eine G4-Fritte wird die Verbindung (6) als klare Flüssigkeit erhalten. Ausbeute : 18,8 g (39,8 %) ; $n_D^{20}$ : 1,4450 ; IR (Film) : 3 350 (m ; OH), 1 085 (vs ; Si—O—Si) und 800 $cm^{-1}$ (vs ; Si—$CH_3$).

MS : m/e 472 ($M^+$) (1) ; 222 (M—$CH_3$, —2$(CH_2)_3$—OH, —O—Si$(CH_3)$—$CH_2$—$CH_2$—$OH)^+$ (81) ; 207 (M—2 $CH_3$, —2$(CH_2)_3$—OH, —O—Si$(CH_3)$—$CH_2$—$CH_2$—$CH_2$—$OH)^+$ (100).

$^1H$ NMR($CDCl_3$) : = 0,08 (s ; Si—$CH_3$, 12H), 0,49 (m ; Si—$CH_2$—, 8H), 1,56 (m ; —$CH_2$—C$\underline{H}_2$—$CH_2$—, 8H), 2,60 (s(b) ; —OH, 4H), 3,50 (m ; —C$\underline{H}_2$—OH, 8H).

$C_{16}H_{40}O_8Si_4$ (472,9)
Berechnet : C 40,64 H 8,53
Gefunden : C 41,13 H 8,65

Beispiel 7

Die Verbindung (7) enthält zwei Urethan- und zwei Disiloxaneinheiten sowie zwei Hydroxygruppen als Endgruppen.

Die Verbindung (7) kann wie folgt hergestellt werden :

11,6 g (0,2 mol) Allylalkohol werden in einen Rundkolben gebracht und zum Rückfluß erhitzt. Bei Zugabe von 26,0 g (0,1 mol) Methylen-bis-(1,4-cyclohexyle nisocyanat) erhöht sich die Temperatur auf 100°. Nach 30 Minuten wird die Mischung abgekühlt und das Rohprodukt wird aus Aceton/Ether (1 : 1) umkristallisiert. Auf diese Weise wird der Methylen-bis(1,4-cyclohexylencarbamidsäureallylester als feines weißes Pulver erhalten. Ausbeute : 29,1 g (77,0 %) ; Schmelzpunkt 100-101 °C.

IR(KBr) : 3 310 (m ; NH), 1 690 (s ; Amid I), 1 645 (m ; $>C=C<$ ), und 1 540 $cm^{-1}$ (s ; Amid II).

MS : m/e 378 ($M^+$) (65) ; 293 (M—CO—O—$CH_2$—CH=$CH_2)^+$ (87) ; 196 (M—CO—O—$CH_2$—CH=$CH_2$, —$C_6H_{10}$—$NH)^+$ (80) ; 41 ($CH_2$—CH=$CH_2)^+$ (100).

$^1H$ NMR($CDCl_3$) : δ = 0,8-3,9 (m ; — 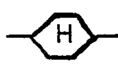 —$CH_2$— 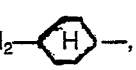 —, 22H), 4,50 (d ; —$CH_2$—O—, 4H), 4,84 (s(b) ; >NH, 2H), 5,20 (m ; $\underline{H}_2$C=CH—, 2H), 5,30 (m ; $\underline{H}_2$C=CH—, 2H), 5,92 (m ; $H_2$C=C$\underline{H}$—, 2H).

$C_{21}H_{34}N_2O_4$ (378,5)
Berechnet : C 66,64 N 7,40 H 9,05
Gefunden : C 66,99 N 7,57 H 9,13

3,8 g (10 mmol) des so erhaltenen pulverförmigen Reaktionsproduktes werden in absolutem Xylol gelöst und zum Rückfluß erhitzt. Nach Zugabe von 1 ml einer 1 Gew.-% $H_2PtCl_6$-Lösung in Diethylenglykoldiethylether als Katalysator werden 5,3 g (20 m Mol) 1-(3-Trimethylsilyloxypropyl)-1,1,3,3-tetramethyldisiloxan in 10 ml absolutem Xylol gelöst und tropfenweise unter Rühren zugegeben. Nach 4 Stunden Rückfluß wird die Mischung abgekühlt und 50 ml einer 5 Gew.-% HCl zugegeben und die Mischung 24 Stunden gerührt. Die organische Schicht wird abgetrennt und mit $Na_2SO_4$ getrocknet. Danach werden die Nebenprodukte (Hexamethyldisiloxan, Trimethylsilanol) und Xylol weitgehend abgezogen. Die Nebenprodukte werden vollständig bei 50 °C und 0,1 hPa beseitigt. Die Verbindung (7) wird als bräunliche viskose Flüssigkeit erhalten.

Ausbeute : 6,6 g (86,0 % ; $n_D^{20}$ : 1,4637).

IR(film) : 3 340 (m ; NH, OH), 1 710 (s ; Amid I), 1 540 (s ; Amid II) und 1 080 $cm^{-1}$ (vs ; Si—O—Si).

$^1H$ NMR($CDCl_3$) : δ = 0,08 (m ; Si—$CH_3$, 24H), 0,46 (m ; Si—$CH_2$—, 8H), 1,14-3,45 (m ; — 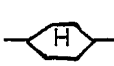 —$CH_2$— 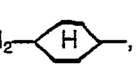 —, —$CH_2$—$CH_2$—$CH_2$—, —OH, 32H), 3,49 (m ; —C$\underline{H}_2$—OH, 4H), 3,96 (t ; —C$\underline{H}_2$—O—CO—, 4H), 4,52 (s(b) ; >NH, 2H).

$C_{35}H_{74}N_2O_8Si_4$ (763,3)
Berechnet : C 55,07 N 3,67 H 9,77
Gefunden : C 53,46 N 3,29 H 9,62

Beispiel 8

Die Verbindung (8) enthält zwei Urethan- und zwei Disiloxaneinheiten sowie zwei Hydroxygruppen als Endgruppen.

Das Diol (8) kann wie folgt hergestellt werden. Zunächst wird Hexamethylendicarbamidsäureallyle ster durch Zugabe von 16,8 g (0,1 mol) Hexamethylendiisocyanat zu 11,6 g (0,2 mol) absolutem Allylalkohol hergestellt, wie es im einzelnen bei der Synthese des vorstehenden Beispiels beschrieben ist.

Ausbeute: 19,3 g (68,0 %); Schmelzpunkt 71-72 °C. (Ausbeute bei V. G. Sinyavskii, A. L. Kravchenko, V. T. Burmistrov, L. N. Korsakova, Zh. Org. Khim. 5 870 (1967): 72,5 %, Schmelzpunkt 72,5-73 °C).

2,84 g (10 mmol) dieses Esters werden dann zu 5,3 g (20 mmol) 1-(3-Trimethylsilyloxypropyl)-1,1 3,3-tetramethyldisiloxan gegeben und die Synthese wird wie im vorstehenden Beispiel durchgeführt. Man erhält das Diol (8) als bräunliche viskose Flüssigkeit.

Ausbeute: 5.6 g (84,0 %); $n_D^{20}$: 1,4501.

IR(Film): 3 340 (m; NH, OH), 1 705 (s; Amid I), 1 540 (s; Amid II), and 1 060 $cm^{-1}$ (vs; Si—O—Si).

$^1$H NMR($CDCl_3$): δ = 0,08 (m; Si—$CH_3$, 24H), 0,52 (m; Si—$CH_2$—, 8H), 1,32 (m; —$CH_2$—, 4H), 1,48 (m; —$CH_2$—, 4H), 1,58 (m; —$CH_2$—$\underline{CH_2}$—$CH_2$—, 8H), 3,14 (m; —$\underline{CH_2}$—NH—, 4H), 3,40 (t; —$\underline{CH_2}$—OH, 4H), 3,99 (t; —$CH_2$—O—CO—, 4H), 4,94 (s(b), —NH, 2H).

$C_{28}H_{62}O_8Si_4$ (667,2)

Berechnet: C 50,41 N 4,20 H 9,37
Gefunden: C 49,87 N 4,08 H 9,17

## Beispiel 9

1,3-Bis(N-ethylcarbamoyloxypropyl)tetramethyldisiloxane (15): 28 g (40 mmol) Ethylisocyanatwerden zu 5,0 g (20 mmol) der Verbindung (1) gegeben.

Ausbeute: 6,7 g (86,0 %), $n_D^{20}$: 1,4509.

$^1$H-NMR ($CCl_4$, 100 MHz): δ = 0,08 (s; Si—$CH_3$, 12H), 0,50 (t; Si—$CH_2$—, 4H), 1,14 (t; $\underline{CH_3}$—$CH_2$—, 6H), 1,60 (m; —$CH_2$—$\underline{CH_2}$—$CH_2$—, 4H); 1,15 (m; —$\underline{CH_2}$—NH—, 4H), 3,94 (t; —$CH_2$—$\underline{CH_2}$—O—, 4H), 5,25 (m(b); >N—H, 2H).

$C_{16}H_{36}N_2O_5Si_2$ (392,6)

Berechnet: C 48,95 H 9,24 N 7,13
Gefunden: C 48,74 H 9,15 N 7,11

## Beispiel 10

1,3-Bis(N-butylcarbamoyloxypropyl)tetramethyldisiloxane (16) 4 g (40 mmol) Butylisocyanatwerden zu 5,0 g (20 mmol) der Verbindung (1) gegeben.

Ausbeute: 8,6 g (96,0 %), $n_D^{20}$: 1,4475.

$^1$H-NMR ($CCl_4$, 100 MHz): δ = 0,06 (s; Si—$CH_3$, 12H), 0,50 (t; Si—$CH_2$—, 4H), 0,93 (t; $\underline{CH_3}$—$CH_2$—, 6H), 1,50 (m; aliph. H, 12H), 3,10 (m; —$\underline{CH_2}$—NH—, 4H), 4,07 (t; —$CH_2$—$\underline{CH_2}$—O—, 4H), 5,0 (m(b); >N—H, 2H).

$C_{20}H_{44}N_2O_5Si_2$ (448,7)

Berechnet: C 53,53 H 9,88 N 6,24
Gefunden: C 52,88 H 10,14 N 6,40

## Beispiel 11

1,3-Bis(N-hexylcarbamoyloxypropyl)tetramethyldisiloxane (17): 5,1 g (40 mmol) Hexylisocyanat werden zu 5,0 g (20 mmol) der Verbindung (1) gegeben.

Ausbeute: 9,8 g (96,0 %), $n_D^{20}$: 1,4550.

$^1$H-NMR ($CCl_4$, 100 MHz): δ = 0,06 (s; Si—$CH_3$, 12H), 0,50 (t; Si—$CH_2$—, 4H), 0,86 (t; $\underline{CH_3}$—$CH_2$—, 6H), 1,24 (m; aliph. H, 16H), 1,54 (m; —$CH_2$—$\underline{CH_2}$—$CH_2$—, 4H), 2,95 (m; —$\underline{CH_2}$—NH—, 4H), 3,90 (t; —$CH_2$—$\underline{CH_2}$—O—, 4H), 6,94 (m(b); >N—H, 2H).

$C_{24}H_{52}N_2O_5Si_2$ (504,9)

Berechnet: C 57,09 H 10,38 N 5,56
Gefunden: C 56,47 H 10,36 N 5,28

## Beispiel 12

Poly(oxytrimethylentetramethyldisiloxane-1,3-diyltrimethylenoxycarbonyliminotetramethyleniminonyl) (18): 2,8 g (20 mmol) Tetramethylendiisocyanat werden zu 5,0 g (20 mmol) der Verbindung (1) gegeben.

Ausbeute: 7,6 g (97,0 %).

$^1$H-NMR ($CCl_4$, 100 MHz): δ = 0,14 (s; Si—$CH_3$, 12H), 0,56 (t; Si—$CH_2$—, 4H), 1,64 (m; aliph. H; 8H), 3,24 (m; —$\underline{CH_2}$—NH—, 4H); 4,00 (t; —$CH_2$—$\underline{CH_2}$—O—, 4H), 4,92 (m(b); >N—H, 2H).

$(C_{16}H_{34}N_2O_5Si_2)_n$ $(390,6)_n$

Berechnet: C 49,2 H 8,7 N 7,2
Gefunden: C 48,6 H 9,0 N 7,3

## Beispiel 13

Poly(oxytrimethylentetramethyldisiloxane-1,3-diyltrimethylenoxycarbonyliminohexamethyleniminonyl)

(19) 3,4 g (20 mmol) Hexamethylendiisocyanat werden zu 5,0 g (20 mmol) der Verbindung (1) gegeben.

Ausbeute : 8,0 g (95,0 %).

$^1$H-NMR ($CCl_4$, 100 MHz) : δ = 0,14 (s ; Si—$CH_3$, 12H), 0,45 (t ; Si—$CH_2$—, 4H), 1,40 (m ; aliph. H, 12H), 3,24 (m ; —C$\underline{H}_2$—NH—, 4H), 4,00 (t ; —$CH_2$—C$\underline{H}_2$—O—, 4H), 4,92 (m(b) ; >N—$\underline{H}$, 2H).

$(C_{18}H_{38}N_2O_5Si_2)_n$ $(418,7)_n$

Berechnet : C 51,7 H 9,1 N 6,7

Gefunden : C 51,0 H 9,1 N 6,8

Beispiel 14

3,5-Bis(N-ethylcarbamoyloxypropyl)octamethyltetrasiloxane (20) : 2,8 g (40 mmol) Ethylisocyanat werden zu 8,0 g (20 mmol) der Verbindung (4) gegeben.

Ausbeute : 10,6 g (98,0 %).

$^1$H-NMR ([$^2H_6$]-DMSO, 100 MHz) : δ = 0,08 (s ; Si—$CH_3$, 24H), 0,46 (m ; Si—$CH_2$—, 4H), 1,00 (m ; C$\underline{H}_3$—$CH_2$—, 6H), 1,56 (m ; —$CH_2$—C$\underline{H}_2$—$CH_2$—, 4H) ; 3,00 (q ; —C$\underline{H}_2$—$CH_3$, 4H), 3,88 (t ; —$CH_2$—C$\underline{H}_2$—O—, 4H), 6,90 (m(b) ; >N—H, 2H).

$C_{20}H_{48}N_2O_7Si_4$ (540,9)

Berechnet : C 44,41 H 8,94 N 5,18

Gefunden : C 44,59 H 9,16 N 5,26

Beispiel 15

3,5-Bis(N-butylcarbamoyloxypropyl)octamethyltetrasiloxane (21) : 4,0 g (40 mmol) Butylisocyanat werden zu 8,0 g (20 mmol) der Verbindung (4) gegeben.

Ausbeute : 11,6 g (97,0 %).

$^1$H-NMR ([$^2H_6$]-DMSO, 100 MHz) : δ = 0,08 (s ; Si—C$\underline{H}_3$, 24H), 0,48 (m ; Si—C$\underline{H}_2$, 4H), 0,87 (m ; C$\underline{H}_3$—$CH_2$, 6H), 1,33 (m ; NH—$CH_2$—C$\underline{H}_2$—C$\underline{H}_2$—, 8H) ; 1,55 (m ; $CH_2$—C$\underline{H}_2$—$CH_2$—O, 4H), 2,98 (m ; C$\underline{H}_2$—NH, 4H), 3,88 (t ; $CH_2$—C$\underline{H}_2$—O, 4H), 6,90 (m(b) ; N—H, 2H).

$C_{24}H_{56}N_2O_7Si_4$ (597,0)

Berechnet : C 48,28 H 9,45 N 4,69

Gefunden : C 48,11 H 9,23 N 5,01

Beispiel 16

3,5-Bis(N-hexylcarbamoyloxypropyl)octamethyltetrasiloxane (22) : 51 g (40 mmol) Hexylisocyanat werden zu 8,0 g (20 mmol) der Verbindung (4) gegeben.

Ausbeute : 12,8 g (98,0 %).

$^1$H-NMR ([$^2H_6$]-DMSO, 100 MHz) : δ = 0,07 (s ; Si—$CH_3$, 24H), 0,50 (m ; Si—$CH_2$—, 4H), 0,86 (m ; C$\underline{H}_3$—$CH_2$—, 6H), 1,26 (m ; aliph. H, 16H) ; 1,5 (m ; —$CH_2$—C$\underline{H}_2$—$CH_2$—O—, 4H), 2,95 (m ; —C$\underline{H}_2$—NH—, 4H), 3,88 (t ; —$CH_2$—C$\underline{H}_2$—O—, 4H), 6,92 (b ; >N—H, 2H).

$C_{28}H_{64}N_2O_7Si_4$ (653,2)

Berechnet : C 51,49 H 9,88 N 4,29

Gefunden : C 49,20 H 9,63 N 4,10

Beispiel 17

Poly(oxytrimethylenoctamethyltetrasiloxane-3,5-diyltrimethylenoxycarbonyliminotetramethyleniminyl)

(23) 1,4 g (10 mmol) Tetramethylendiisocyanat werden zu 4,0 g (10 mmol) der Verbindung (4) gegeben, welche in 50 ml Dioxan gelöst und auf 100 °C erwärmt ist. Nach 2 Stunden Rühren wird ein weißer Niederschlag gebildet, der mit Petroether/Benzol (1 : 1) gewaschen wird. Die erhaltenen Verbindung (23) schmilzt nicht bis zu 300 °C.

Ausbeute : 4,5 g (83,0 %).

$(C_{20}H_{46}N_2O_7Si_4)_n$ $(538,9)_n$

Berechnet : C 44,6 H 8,5 N 5,2

Gefunden : C 44,3 H 8,3 N 5,4

Beispiel 18

Poly(oxytrimethylenoctamethyltetrasiloxane-3,5-diyltrimethylenoxycarbonyliminohexamethyleniminocarbonyl)

(24) 1,7 g (10 mmol) Hexamethylendiisocyanat werden zu 4,0 g (10 mmol) der Verbindung (4) gegeben und die Behandlung wie im Beispiel 17 durchgeführt. Die erhaltenen Verbindung (24) schmilzt nicht bis zu 300 °C.

Ausbeute : 4,8 g (84,0 %).

$(C_{22}H_{50}N_2O_7Si_4)_n$ $(567{,}0)_n$
Berechnet : C 46,6 H 8,8 N 5,0
Gefunden : C 46,3 H 8,4 N 5,1

**Patentansprüche**

1. Modifizierter Siliconkautschuk, enthaltend im wesentlichen ein vernetztes Copolymer aus
a) Dimethylsiloxanen, welche Hydroxyalkylgruppen enthalten, und
b) Isocyanaten,
dadurch gekennzeichnet, dass die Hauptketten des Copolymers, welche Dimethylsiloxan- und Urethaneinheiten enthalten, über Methylgruppen der Dimethylsiloxaneinheiten vernetzt sind.

2. Siliconkautschuk nach Anspruch 1, dadurch gekennzeichnet, dass als Hydroxyalkylgruppen enthaltende Dimethylsiloxane eine oder mehrere der nachstehenden Verbindungen verwendet werden :
1,3-Bis(3-hydroxypropyl)-1,1,3,3-tetramethyldisiloxan ;
1-(3-Hydroxypropyl)-1,1,3,3-tetramethyldisiloxan ;
1,3-Bis(6,7-dihydroxy-4-oxaheptyl)-1,1,3,3-tetramethyldisiloxan ;
3,5-Bis(3-hydroxypropyl)-1,1,1,3,5,7,7,7-octamethyltetrasiloxan ;
1-(6,7-Dihydroxy-4-oxaheptyl)-1,1,3,3-tetramethyldisiloxan ;
2,4,6,8-Tetrakis(3-hydroxypropyl)-2,4,6,8-tetramethylcyclotetrasiloxan ;
Methylen-bis(1,4-cyclohexylencarbamidsäure-3-[3-(3-hydroxypropyl)-1,1,3,3-tetramethyldisiloxanyl]-propylester ;
Hexamethylen-1,6-biscarbamidsäure-3-[3-(3-hydroxypropyl)-1,1,3,3-tetramethyldisiloxanyl]propylester.

3. Siliconkautschuk nach Anspruch 1, gekennzeichnet durch folgende Strukturformel,

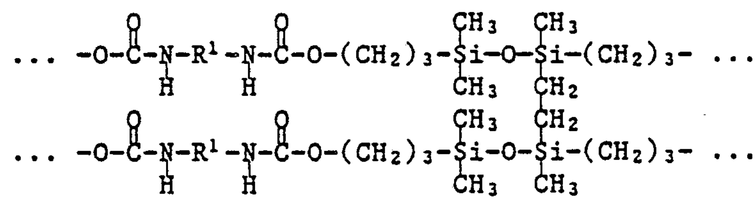

worin $R^1$ für

$-(CH_2)_n-$ , 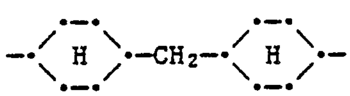 oder 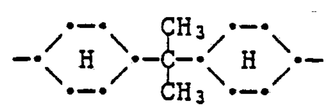

steht und n 2 bis 16 bedeutet.

4. Siliconkautschuk nach Anspruch 1, dadurch gekennzeichnet, dass die Hauptketten als Alkoholkomponente der Urethaneinheiten den Rest eines zwei Hydroxygruppen enthaltenden Dimethylsiloxans enthalten.

5. Siliconkautschuk nach Anspruch 1, dadurch gekennzeichnet, dass die Hauptketten als Alkoholkomponente der Urethaneinheiten zusätzlich den zweiwertigen Rest von Pantothenol enthalten.

6. Siliconkautschuk nach einem der Ansprüche 1 oder 5 gekennzeichnet durch folgende Strukturformel für eine Hauptkette in unvernetzter Form :

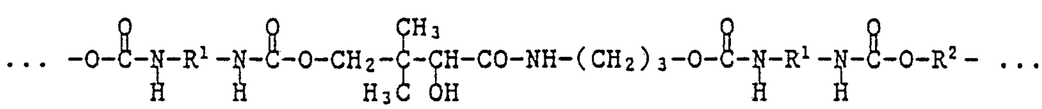

worin $R^2$ für

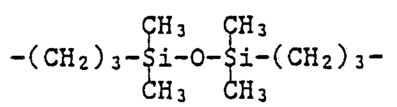 ;

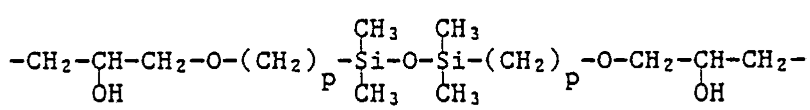

oder

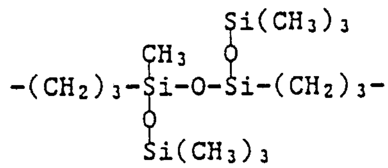

steht, p 3, 4 oder 5 bedeutet und $R^1$ die in Anspruch 3 angegebenen Bedeutungen aufweist.

7. Verfahren zur Herstellung eines Siliconkautschuks nach Anspruch 1, dadurch gekennzeichnet, dass Hydroxyalkylgruppen enthaltende Dimethylsiloxane mit Isocyanaten umgesetzt und die Ketten eines so erhaltenen, Dimethylsiloxan- und Urethaneinheiten enthaltenden Copolymers über Methylgruppen vernetzt werden.

8. Verfahren nach Anspruch 7, dadurch gekennzeichnet, dass zunächst Pantothenol oder ein anderes Diol oder Tetraol mit Diisocyanat zur Reaktion gebracht wird und dann ein so erhaltenes, Urethaneinheiten und Isocyanatgruppen enthaltendes Reaktionsprodukt mit einem Hydroxyalkylgruppen enthaltenden Dimethylsiloxan zur Reaktion gebracht und vernetzt wird.

9. Verfahren nach Anspruch 7 oder 8, dadurch gekennzeichnet, dass als Hydroxyalkylgruppen enthaltende Dimethylsiloxane, Diole und Tetraole eine oder mehrere der nachstehenden Verbindungen verwendet werden :

1,3-Bis(3-hydroxypropyl)-1,1,3,3-tetramethyldisiloxan ;
1-(3-Hydroxypropyl)-1,1,3,3-tetramethyldisiloxan ;
1,3-Bis(6,7-dihydroxy-4-oxaheptyl)-1,1,3,3-tetramethyldisiloxan ;
3,5-Bis(3-hydroxypropyl)-1,1,1,3,5,7,7,7-octamethyltetrasiloxan ;
1-(6,7-Dihydroxy-4-oxaheptyl)-1,1,3,3-tetramethyldisiloxan ;
2,4,6,8-Tetrakis(3-hydroxypropyl)-2,4,6,8-tetramethylcylotetrasiloxan ;
Methylen-bis(1,4-cyclohexylencarbamidsäure)-3-[3-(3-hydroxypropyl)-1,1,3,3-tetramethyldisiloxanyl]-propylester ;
Hexamethylen-1,6-biscarbamidsäure-3-[3-(3-hydroxypropyl)-1,1,3,3-tetramethyldisiloxanyl]propylester.

10. Verfahren nach einem der Ansprüche 7 bis 9, dadurch gekennzeichnet, dass zur Vernetzung kautschukbildende Initiatoren, insbesondere Peroxide, verwendet werden.

11. Verfahren nach Anspruch 8, dadurch gekennzeichnet, dass das Molverhältnis von Pantothenol bzw. Diol oder Tetraol zu Diisocyanat auf 1 : 2 eingestellt wird.

12. Verwendung eines Siliconkautschuks nach einem der Ansprüche 1 bis 6 als Material für optische Linsen.

13. Verwendung eines Siliconkautschuks nach einem der Ansprüche 1 bis 6 als Material für Kontaktlinsen.

14. Verwendung eines Siliconkautschuks nach einem der Ansprüche 1 bis 6 als Material für Intraokularlinsen.

15. Verwendung eines Siliconkautschuks nach einem der Ansprüche 1 bis 6 als Ueberzugsmaterial auf anderen Materialien.

16. Verwendung eines Silikonkautschuks nach einem der Ansprüche 1 bis 6 zur Erhöhung der Kratzfestigkeit von organischen oder anorganischen Stoffen.

17. Optische Linse, insbesondere Kontakt- oder Intraokularlinse, dadurch gekennzeichnet, dass der gesamte Linsenkörper aus einem Siliconkautschuk nach einem der Ansprüche 1 bis 6 besteht.

18. Optische Linse, insbesondere Kontakt- oder Intraokularlinse, dadurch gekennzeichnet, dass zumindest die Oberfläche des Linsenkörpers aus einem Siliconkautschuk nach einem der Ansprüche 1 bis 6 besteht.

## Claims

1. Modified silicone rubber, comprising essentially a crosslinked copolymer of
a) dimethylsiloxanes that contain hydroxyalkyl groups, and
b) isocyanates,
wherein the main chains of the copolymer, which contain dimethylsiloxane and urethane units, are crosslinked via methyl groups of the dimethylsiloxane units.

2. Silicone rubber according to claim 1, wherein there are used as hydroxyalkyl group-containing dimethylsiloxanes one or more of the following compounds :

1,3-bis(3-hydroxypropyl)-1,1,3,3-tetramethyldisiloxane ;
1-(3-hydroxypropyl)-1,1,3,3-tetramethyldisiloxane ;
1,3-bis(6,7-dihydroxy-4-oxaheptyl)-1,1,3,3-tetramethyldisiloxane ;
3,5-bis(3-hydroxypropyl)-1,1,1,3,5,7,7,7-octamethyltetrasiloxane ;
1-(6,7-dihydroxy-4-oxaheptyl)-1,1,3,3-tetramethyldisiloxane ;
2,4,6,8-tetrakis(3-hydroxypropyl)-2,4,6,8-tetramethylcyclotetrasiloxane ;
methylene-bis(1,4-cyclohexylenecarbamic acid 3-[3-(3-hydroxypropyl)-1,1,3,3-tetramethyldisi-

loxanyl]-propyl ester ;

hexamethylene-1,6-biscarbamic acid 3-[3-(3-hydroxypropyl)-1,1,3,3-tetramethyldisiloxanyl]propyl ester.

3. Silicone rubber according to claim 1, characterised by the following structural formula

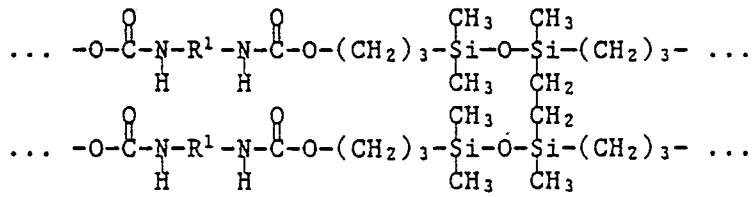

in which $R^1$ is

$-(CH_2)_n-$ , 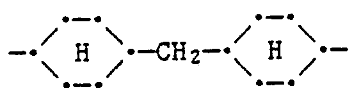 or 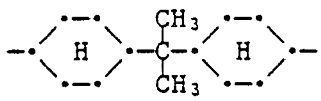

and n is from 2 to 16.

4. Silicone rubber according to claim 1, wherein the main chains contain as alcohol component of the urethane units the radical of a dimethylsiloxane that contains two hydroxy groups.

5. Silicone rubber according to claim 1, wherein the main chains contain as alcohol component of the urethane units, in addition, the divalent radical of pantothenol.

6. Silicone rubber according to claim 1 or 5, characterised by the following structural formula for a main chain in non-crosslinked form :

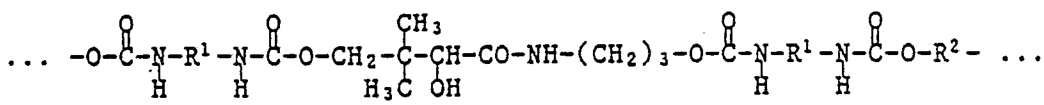

in which $R^2$ is

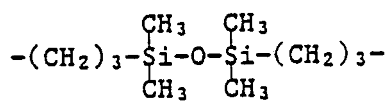 ;

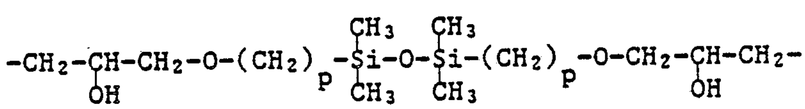

or

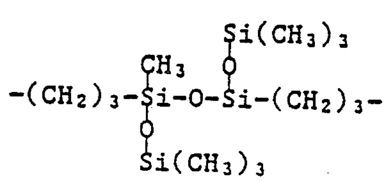

p is 3, 4 or 5 and $R^1$ has the meanings given in claim 3.

7. A process for the preparation of a silicone rubber according to claim 1, wherein hydroxyalkyl group-containing dimethylsiloxanes are reacted with isocyanates and the chains of a resulting copolymer containing dimethylsiloxane and urethane units are crosslinked via methyl groups.

8. A process according to claim 7, wherein first of all pantothenol or another diol or tetraol is caused to react with diisocyanate and then a resulting reaction product containing urethane units and isocyanate groups is caused to react with a hydroxyalkyl group-containing dimethylsiloxane and crosslinked.

9. A process according to claim 7 or 8, wherein there are used as hydroxyalkyl group-containing dimethylsiloxanes, diols and tetraols one or more of the following compounds :

1,3-bis(3-hydroxypropyl)-1,1,3,3-tetramethyldisiloxane ;

1-(3-hydroxypropyl)-1,1,3,3-tetramethyldisiloxane ;

1,3-bis(6,7-dihydroxy-4-oxaheptyl)-1,1,3,3-tetramethyldisiloxane ;

3,5-bis(3-hydroxypropyl)-1,1,1,3,5,7,7,7-octamethyltetrasiloxane ;

1-(6,7-dihydroxy-4-oxaheptyl)-1,1,3,3-tetramethyldisiloxane ;

2,4,6,8-tetrakis(3-hydroxypropyl)-2,4,6,8-tetramethylcyclotetrasiloxane ;

methylene-bis(1,4-cyclohexylenecarbamic acid 3-[3-(3-hydroxypropyl)-1,1,3,3-tetramethyldisiloxanyl]-propyl ester ;

hexamethylene-1,6-biscarbamic acid 3-[3-(3-hydroxypropyl)-1,1,3,3-tetramethyldisiloxanyl]propyl ester.

10. A process according to any one of claims 7 to 9, wherein rubber-forming initiators, especially peroxides, are used for the crosslinking.

11. A process according to claim 8, wherein the molar ratio of pantothenol, diol or tetraol to diisocyanate is set at 1 : 2.

12. The use of silicone rubber according to any one of claims 1 to 6 as a material for optical lenses.

13. The use of a silicone rubber according to any one of claims 1 to 6 as a material for contact lenses.

14. The use of a silicone rubber according to any one of claims 1 to 6 as a material for intraocular lenses.

15. The use of a silicone rubber according to any one of claims 1 to 6 as a coating material on other materials.

16. The use of a silicone rubber according to any one of claims 1 to 6 to increase the scratch resistance of organic or inorganic materials.

17. Optical lenses, especially contact or intraocular lenses, wherein the whole of the lens body consists of a silicone rubber according to any one of claims 1 to 6.

18. Optical lenses, especially contact or intraocular lenses, wherein at least the surface of the lens body consists of a silicone rubber according to any one of claims 1 to 6.

## Revendications

1. Caoutchouc de silicone modifié contenant essentiellement un copolymère réticulé constitué

a) de diméthylsiloxanes contenant des groupes hydroxyalkyles, et

b) d'isocyanates,

caractérisé en ce que les chaînes principales du copolymère contenant des unités diméthylsiloxane et uréthane, sont réticulés sur les groupes méthyles des unités diméthylsiloxane.

2. Caoutchouc de silicone selon la revendication 1, caractérisé en ce que l'on utilise comme diméthylsiloxanes contenant des groupes hydroxyalkyles un ou plusieurs des composés suivants :

le 1,3-bis(3-hydroxypropyl)-1,1,3,3-tétraméthyldisiloxane ;

le 1-(3-hydroxypropyl)-1,1,3,3-tétraméthyldisiloxane ;

le 1,3-bis(6,7-dihydroxy-4-oxaheptyl)-1,1,3,3-tétraméthyldisiloxane ;

le 3,5-bis(3-hydroxypropyl)-1,1,1,3,5,7,7,7-octaméthyltétrasiloxane ;

le 1-(6,7-dihydroxy-4-oxaheptyl)-1,1,3,3-tétraméthyldisiloxane ;

le 2,4,6,8-tétrakis(3-hydroxypropyl)-2,4,6,8-tétraméthylcyclotétrasiloxane ;

l'ester 3-[3-(3-hydroxypropyl)-1,1,3,3-tétraméthyldisiloxanyl]-propyle de l'acide méthylène-bis-(1,4-cyclohexylène)carbamique ;

l'ester 3-[3-(3-hydroxypropyl)-1,1,3,3-tétraméthyldisiloxanyl]-propyle de l'acide hexaméthylène-1,6-bis-carbamique.

3. Caoutchouc de silicone selon la revendication 1, caractérisé par la formule structurale suivante :

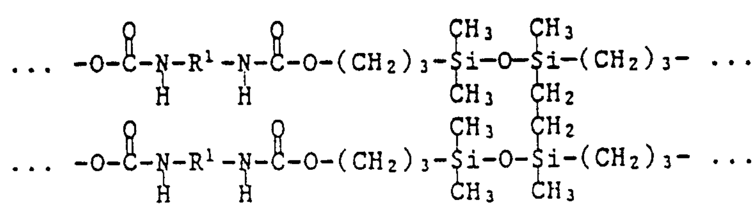

où $R^1$ représente

$-(CH_2)_n-$ , 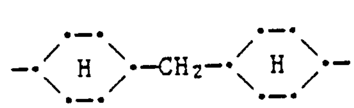 ou 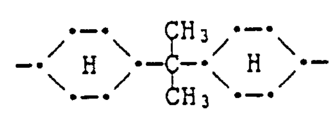

et où n va de 2 à 16.

4. Caoutchouc de silicone selon la revendication 1, caractérisé en ce que les chaînes principales contenant, comme composants alcools, des unités uréthane, le reste d'un diméthylsiloxane contenant deux groupes hydroxy.

5. Caoutchouc de silicone selon la revendication 1, caractérisé en ce que les chaînes principales contiennent, comme composants alcools, des unités uréthane, en plus du reste bivalent du pantothénol.

6. Caoutchouc de silicone selon l'une des revendications 1 ou 5, caractérisé par la formule structurale suivante pour une chaîne principale sous forme non réticulée :

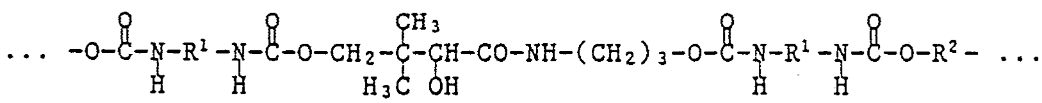

où $R^2$ représente

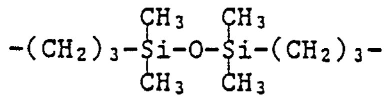 ;

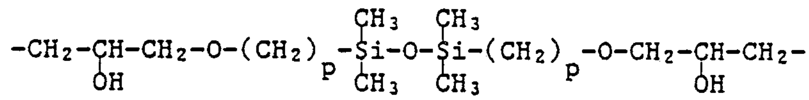

ou

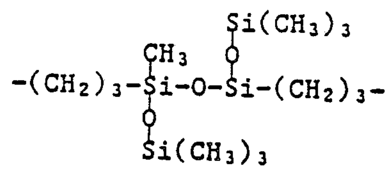

p est égal à 3, 4 ou 5 et $R^1$ a les significations données dans la revendication 3.

7. Procédé de préparation d'un caoutchouc de silicone selon la revendication 1, caractérisé en ce que l'on fait réagir les diméthylsiloxanes contenant les groupes hydroxyalkyles avec des isocyanates et en ce que l'on réticule les chaînes d'un copolymère contenant les unités diméthylsiloxane et uréthane ainsi obtenu sur les groupes méthyles.

8. Procédé selon la revendication 7, caractérisé en ce que, tout d'abord, l'on fait réagir le pantothénol ou un autre diol ou triol avec un diisocyanate et en ce qu'ensuite l'on fait réagir le produit de la réaction contenant les unités uréthane et isocyanate ainsi obtenu avec un diméthylsiloxane contenant des groupes hydroxyalkyles et l'on réticule.

9. Procédé selon la revendication 7 ou 8, caractérisé en ce que l'on utilise comme diméthylsiloxanes, diols et tétraols contenant des groupes hydroxyalkyles l'un ou plusieurs des composés suivants :

le 1,3-bis(3-hydroxypropyl)-1,1,3,3-tétraméthyldisiloxane ;
le 1-(3-hydroxypropyl)-1,1,3,3-tétraméthyldisiloxane ;
le 1,3-bis(6,7-dihydroxy-4-oxaheptyl)-1,1,3,3-tétraméthyldisiloxane ;
le 3,5-bis(3-hydroxypropyl)-1,1,1,3,5,7,7,7-octaméthyltétrasiloxane ;
le 1-(6,7-dihydroxy-4-oxaheptyl)-1,1,3,3-tétraméthyldisiloxane ;
le 2,4,6,8-tétrakis(3-hydroxypropyl)-2,4,6,8-tétraméthylcyclotétrasiloxane ;
l'ester 3-[3-(3-hydroxypropyl)-1,1,3,3-tétraméthyldisiloxanyl]-propyle de l'acide méthylène-bis-(1,4-cyclohexylène)carbamique ;
l'ester 3-[3-(3-hydroxypropyl)-1,1,3,3-tétraméthyldisiloxanyl]-propyle de l'acide hexaméthylène-1,6-biscarbamique.

10. Procédé selon l'une des revendications 7 à 9, caractérisé en ce que l'on utilise pour la réticulation des initiateurs formant du caoutchouc, en particulier des peroxydes.

11. Procédé selon la revendication 8, caractérisé en ce que l'on règle le rapport molaire du pantothénol ou du diol ou tétraol au diisocyanate à 1 : 2.

12. Utilisation d'un caoutchouc de silicone selon l'une des revendications 1 à 6 comme matériau pour lentilles optiques.

13. Utilisation d'un caoutchouc de silicone selon l'une des revendications 1 à 6 comme matériau pour lentilles de contact.

14. Utilisation d'un caoutchouc de silicone selon l'une des revendications 1 à 6 comme matériau pour lentilles intraoculaires.

15. Utilisation d'un caoutchouc de silicone selon l'une des revendications 1 à 6 comme matériau de revêtement pour d'autres matériaux.

16. Utilisation d'un caoutchouc de silicone selon l'une des revendications 1 à 6 pour augmenter la résistance aux éraflures de matériaux organiques ou minéraux.

17. Lentilles optiques, en particulier lentilles de contact ou lentilles intraoculaires, caractérisées en ce que la totalité du corps de la lentille est constituée par un caoutchouc de silicone selon l'une des revendications 1 à 6.

18. Lentilles optiques, en particulier lentilles de contact ou lentilles intraoculaires, caractérisées en ce qu'au moins la surface du corps de la lentille est constituée d'un caoutchouc de silicone selon l'une des revendications 1 à 6.